# EUROPEAN PATENT SPECIFICATION

(11) **EP 3 306 489 B1**
(45) Date of publication and mention of the grant of the patent: **31.08.2022**
(21) Application number: 16799185.0
(22) Date of filing: 28.04.2016
(51) Int. Cl.: G06F 16/955, G06F 21/62

(54) **INTERACTION RECORD QUERY PROCESSING METHOD AND DEVICE**
VERFAHREN UND VORRICHTUNG ZUR VERARBEITUNG VON INTERAKTIONSAUFZEICHNUNGSANFRAGEN
PROCÉDÉ ET DISPOSITIF DE TRAITEMENT D'INTERROGATION D'ENREGISTREMENT D'INTERACTION

(30) Priority: 28.05.2015 CN 201510284669
(43) Date of publication of application: 11.04.2018
(73) Proprietor: Advanced New Technologies Co., Ltd., George Town, Grand Cayman KY1-9008 (KY)
(72) Inventor: TIAN, Ye, Hangzhou 310099 (CN)
(74) Representative: Fish & Richardson P.C.
(86) International application number: PCT/CN2016/080439
(87) International publication number: WO 2016/188296

(56) References cited:
- EP-A1- 2 093 933
- WO-A1-2014/138747
- CN-A- 102 833 277
- CN-A- 103 761 327
- CN-A- 104 580 364
- US-A1- 2006 190 742
- Joe Waters: "QR Codes for Dummies" In: "QR Codes for Dummies", 3 May 2012 (2012-05-03), XP055512892, ISBN: 978-1-118-33703-5 pages 48-56, * the whole document *
- Jonathan Katz ET AL: "Chapter 1 Introduction; Chapter 10 Key Management" In: "Introduction to Modern Cryptography", 6 November 2014 (2014-11-06), Chapman and Hall/CRC, XP055552522, ISBN: 978-1-4665-7026-9 pages 1-8, * page 3, line 8 - line 11 * * chapter 1.2; page 4, line 1 - line 16 * * page 5, line 1 - line 8; figure 1.1 * * page 5, line 19 - line 25 * * page 6, line 1 - line 22; figure 1.2 * * page 7, line 1 - line 2 * * page 359, line 1 - line 18 *
- How To Support: "How to share a Link to your Photo Album with Friends & Family on Google(TM) Plus", , 22 July 2013 (2013-07-22), XP055552569, Retrieved from the Internet: URL:https://www.youtube.com/watch?v=3v32iu Pz2ac [retrieved on 2019-02-06]

## Description

### Technical Field

The present application relates to the field of data processing, and in particular, to an interaction record query processing method and device.

### Background Art

At present, during data interaction, if both users in the data interaction want to acquire an interaction record of the data interaction being conducted, they may directly conduct query by logging in a third-party data interaction platform account. However, another user related to the data interaction (e.g., a user related to a result of the data interaction) cannot directly acquire the interaction record. Instead, two users that actually conduct the data interaction must conduct query first, and then provide the related user with the interaction record information.

Therefore, a solution needs to be proposed in the art such that a related user other than two users conducting data interaction can also query an interaction record generated by the data interaction.

International patent publication WO 2014/138747 A1 to Dropbox, Inc., published 12 September 2014, for "Sharing a content item, " discloses a content management system. A content item on the content management system can be shared using a generated sharing link generated by the content management system. The sharing link can be a custom network address, such as a uniform resource locator (URL), which allows the content item to be accessed without authentication. The sharing link can be configured to request the content item from the content management system. The content management system can use the sharing link to identify the content item and return it to a requesting user device.

### Summary of the Invention

The invention is defined by the appended claims. An objective of the present application is to provide an interaction record query processing method and device, such that an authorized user other than two users conducting data interaction queries a data interaction record generated by the data interaction, without relying on the two users in the data interaction.

Compared with the prior art, the embodiments of the present application have the following advantages: for a data interaction record generated by data interaction, an interaction record query identification is generated and sent, the interaction record query identification being used for querying a data interaction record of a first user; therefore, an authorized user obtaining the interaction record query identification can initiate a query request based on the interaction record query identification, to query the data interaction record of the data interaction.

### Brief Description of the Drawings

After reading detailed descriptions of non-limiting embodiments made with reference to the following accompanying drawings, other features, objectives and advantages of the present application will be more apparent:
FIG 1 is a flowchart of a method according to an embodiment of the present invention;
FIG 2 is a flowchart of a method according to another embodiment of the present invention; and
FIG 3 is a block diagram of a device according to an embodiment of the present invention.

The same or similar reference numerals in the accompanying drawings represent the same or similar components.

### Detailed Description

It should be noted that some exemplary embodiments are described as processes or methods shown as flowcharts before the exemplary embodiments are discussed in more detail. The flowcharts describe operations as sequential processing; however, many operations therein may be implemented in parallel, concurrently or simultaneously. Moreover, the sequence of the operations may be rearranged. The process may be terminated when the operations are accomplished, but the process may further have additional steps that are not included in the accompanying drawings. The process may be corresponding to a method, a function, a regulation, a subroutine, a subprogram and the like.

"Computer devices" referred to in the context may also be referred to as "computers", indicating intelligent electronic devices that can execute a predetermined processing procedure such as numerical computation and/or logical computation by running a predetermined program or instruction, which may include a processor and a memory, where the processor executes the predetermined processing procedure by executing an existence instruction pre-stored in the memory, or hardware such as an ASIC, an FPGA, or a DSP executes the predetermined processing procedure, or the predetermined processing procedure is implemented by using a combination of the two. The computer device includes, but is not limited to, a server, a personal computer, a notebook computer, a tablet computer, a smart phone, and the like.

The computer device includes a user equipment and a network device. The user equipment includes, but is not limited to, a computer, a smart phone, a PDA, and the like. The network device includes, but is not limited to, a single network server, a server group consisting of a plurality of network servers, or a cloud based on cloud computing and constructed by a large number of computers or network servers, wherein the cloud computing is one kind of distributed computing, and is a virtual supercomputer consisting of a group of loosely coupled computer clusters. The computer device may run separately to implement the present application, and may also access a network and implement the present application by conducting an interaction operation with another computer device in the network. The network where the computer device is located includes, but is not limited to, the Internet, a wide area network, a metropolitan area network, a local area network, a VPN network, and the like.

It should be noted that the user equipment, the network device, the network, and the like are merely examples, and other computer devices or networks that currently exist or may appear in the future are available in the present application.

Methods (some are shown by flowcharts) discussed hereinafter may be implemented by using hardware, software, firmware, middleware, microcode, hardware description language, or any combination thereof. When the methods are implemented by using software, firmware, middleware, or microcode, a program code or code segment for implementing a necessary task may be stored in a machine or computer readable medium (such as a storage medium). (One or more) processors may implement the necessary task.

The specific structures and function details disclosed here are merely representative, and are used for describing exemplary embodiments of the present application. However, the present application may be specifically implemented in many alternative manners, and should not be construed as being merely limited to the embodiments described here.

It should be appreciated that, terms such as "first" and "second" may be used here to describe various units; however, these units should not be limited by these terms. Using these terms is merely used for distinguishing one unit from another unit. For example, without departing from the scope of the exemplary embodiments, a first unit may be referred to as a second unit and similarly, a second unit may also be referred to as a first unit. The term "and/or" used here includes any and all combinations of one or more listed associated items.

The term used here is merely used for describing a specific embodiment, and is not intended to limit the exemplary embodiments. Unless otherwise specified in the context clearly, singular forms "a/an" and "one" used here are further intended to include plural forms. It should be further appreciated that, the term "include" and/or "comprise" used here specifies existence of the described feature, integer, step, operation, unit and/or component, and does not exclude existence or addition of one or more other features, integers, steps, operations, units, components and/or combinations thereof.

It should be further noted that, in some alternative implementations, the mentioned functions/actions may occur in an order different from that marked in the accompanying drawings. For example, depending on the involved functions/actions, two drawings shown successively may actually be basically performed simultaneously or sometimes performed according to a reverse order.

The present application is further described in detail with reference to the accompanying drawings.

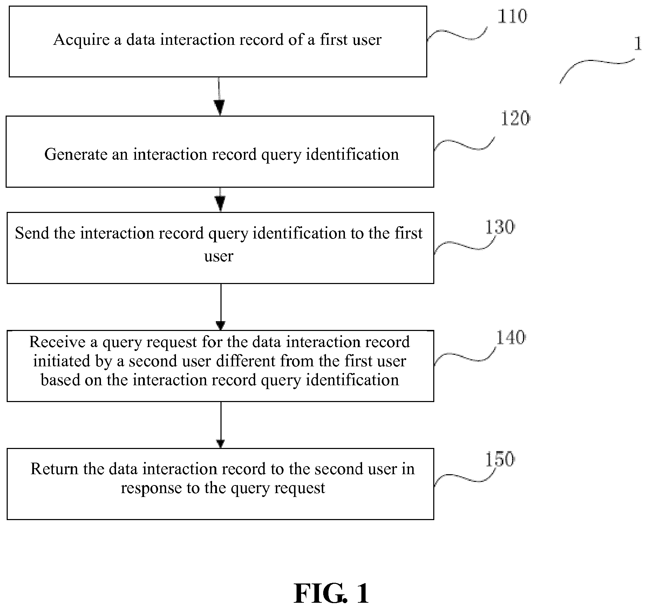

FIG 1 is a flowchart of an interaction record query processing method 1 according to an embodiment of the present application.

The method is a method of processing a data interaction record query for data interaction. The interaction record query processing method is applied to a third-party data interaction platform, to process query on a data interaction record generated by data interaction performed on the third-party data interaction platform. In an example, the method may be applied to monitoring online businesses by a manager. Three interviewers of a human resource department interview a large number of interviewees online simultaneously, the third-party data interaction platform is an interview website or a video conference website, and the interaction record is an interaction record generated between the interviewers and the interviewees. Actually, a human resource supervisor needs to query the interaction record. In this case, the method of the embodiment of the present invention may be used. In another example, the method may be applied to an online shopping platform, where a buyer user purchases a commodity for a friend, the third-party data interaction platform is a shopping website, and the interaction record is an interaction record between the buyer user and a seller user (such as an online store). If the buyer user intends to enable the friend who actually receives the commodity to query the interaction record so as to track the delivery process, the method of the embodiment of the present invention needs to be used.

In step 110, a data interaction record of a first user is acquired.

When two users in data interaction perform data interaction based on a third-party interaction platform, the third-party interaction platform generates a data interaction record for the data interaction. For example, in the example of online interview, the first user is the interviewer, the data interaction of the first user is an online interview behavior, and the data interaction record is an interview record. In the example of shopping website, the first user is the buyer user, the data interaction is an online transaction behavior, and the data interaction record is an order generated by online transaction. The interaction record of the data interaction includes user information of two users (including the first user and another user, for example, a buyer user and a seller user) performing the data interaction, data interaction content, data interaction progress information, and the like. The user information may be, for example, account information of the two users in the data interaction. The data interaction content may be, for example, commodity information when shopping transaction is achieved on an online shopping platform, such as a commodity name, a commodity quantity, and other information. The data interaction progress information may be, for example, logistics information of the purchased commodity, and the like.

In step 120, an interaction record query identification is generated, the interaction record query identification being used for querying the data interaction record of the first user.

The interaction record query identification is a query link of the data interaction record. For example, for an order generated when a transaction is performed by a buyer user and a seller user on an online shopping platform, a query link for querying the order is generated according to the order, and user account information, commodity information, logistics information, and the like of the order is queried in real time by using the query link. The query link is an interaction record query identification.

In another example not covered by the present invention, the interaction record query identification is a QR code generated at least partially according to a query link of the data interaction record. In other words, the query link is included in the QR code, and the QR code is sent to a first user or a second user. Then, the first user or the second user scans the QR code, and initiates, by using the query link obtained through analysis, a request for querying the interaction record of the first user.

In another example not covered by the present invention, the interaction record query identification is a QR code corresponding to a query link of the data interaction record. Different from the above example, the QR code in this example does not include the query link, but may be a random character string corresponding to the query link. A server terminal stores a correspondence between the random character string and the query link. For example, for an order generated when a buyer user and a seller user transact on an online shopping platform, a query link for querying the order is generated according to the order, and a QR code corresponding to the query link is then generated. After the QR code is sent to a first user or a second user, the first user or the second user scans the QR code, obtains a random character string by analysis, and sends a query request to the server. The query request includes the random character string obtained by analyzing the QR code. After receiving the request, the server determines the query link according to the stored correspondence, and determines the interaction record of the first user according to the query link.

In yet another example not covered by the present invention, the interaction record query identification may also be another identification representing the query link of the data interaction record that can be conceived by those skilled in the art. For example, an index is assigned to each query link, and query links and corresponding indexes are stored in a database. In this case, the interaction record query identification may be the index corresponding to the query link in the database.

In step 130, the interaction record query identification is sent to the first user.

In the case that the interaction record query identification is the query link of the data interaction record, for example, if the buyer user purchases a commodity for a friend, a query link of an order is sent to the buyer user. After receiving the query link, the buyer user notifies the friend of the query link online (e.g., by using an email or QQ) or offline (by calling or interview). The friend can query order information (such as commodity information and logistics information) directly on the shopping website platform based on the query link, without querying through the buyer user.

A specific implementation of sending the query link to the first user is that: an acquisition button of the query link, for example, a "copy a query link" button, is displayed on a page on which an interaction record is generated, and the first user selects whether to copy the query link. If the first user needs to copy the query link, the first user clicks the button, and the query link is copied by the first user.

In the case that the interaction record query identification is a QR code, it is only necessary to display the QR code at a corresponding position of a webpage.

In step 140, a query request for the data interaction record initiated by a second user different from the first user based on the interaction record query identification is received.

For example, in the above example that the buyer user purchases a commodity for a friend, the first user is the buyer user, and the second user is the friend.

When the interaction record query identification is the query link of the data interaction record, the query request is initiated, by the second user by opening the query link sent by the first user through QQ or the like. For example, if the second user receives the query link from the first user in an instant messaging application (e.g., in QQ), the second user opens the query link in a browser by directly clicking the query link in the instant messaging application, thereby sending through the browser a query request for querying a corresponding interaction record.

When the interaction record query identification is a QR code generated at least partially according to the query link of the data interaction record, the second user scans the QR code by using a mobile device or the like, and initiates, by using a query link obtained through analysis, a request for querying the interaction record of the first user.

When the interaction record query identification is a QR code corresponding to the query link of the data interaction record, the second user scans the QR code by using a mobile device or the like, obtains a random character string by analysis, and sends a query request to the server.

In step 150, the interaction record is returned to the second user in response to the query request.

Specifically, the interaction record is queried according to an interaction record identification code carried in the query request. The interaction record identification code is different from the interaction record query identification, and it identifies an interaction record, such as an order number, while the interaction record query identification identifies the query link rather than the data interaction record.

When the interaction record query identification is the query link, the interaction record identification code is included in the query link received by the second user. For example, the second user clicks to open the query link, and the generated query request naturally carries the interaction record identification code. The interaction record identification code may be, for example, an order number on an online shopping platform. The order is queried according to the order number, and information of the order obtained by query is returned to the second user. For example, current commodity information, logistics information, and the like of the order are displayed in the browser to the second user.

When the interaction record query identification is a QR code generated at least partially according to the query link of the data interaction record, the second user scans the QR code, and initiates, by using a query link obtained through analysis, the request for querying the interaction record of the first user, the query link included in the request including the interaction record identification code. The interaction record identification code may be, for example, an order number on an online shopping platform.

When the interaction record query identification is a QR code corresponding to the query link of the data interaction record, the second user scans the QR code, obtains a random character string by analysis, and sends a query request to the server, the query request including the random character string obtained by analyzing the QR code. After receiving the request, the server determines the query link according to the stored correspondence, the query link including the interaction record identification code.

A specific implementation of returning the interaction record to the second user is: returning a corresponding interaction record query result according to a query item input by the user, wherein the query item includes: user information two users in the data interaction, data interaction content, and data interaction progress information. Specifically, after the second user initiates the query request for the query link of the data interaction record based on the interaction record query identification, the above query item is displayed to the second user, and the second user selects one or more items therefrom to conduct query. For example, the interaction record is an order on an online shopping platform. After a query request for querying the order is sent through a browser, the online shopping platform (or a server thereof) receives the query request, queries the order according to an order number carried in the query request, and displays to the second user query buttons (the query buttons may be, for example, in the form of hyperlinks) of query items such as "order information", "commodity information", and "logistics information" on a page of the browser, and the second user selects a query item to be queried. For example, the second user clicks the query button "logistics information", and logistics information of the order is displayed to the second user.

In the method described in the above embodiment, an interaction record query identification is generated for a data interaction record generated by data interaction, the interaction record query identification being used for querying a data interaction record of a first user. Even if a second user different from the first user obtains the interaction record query identification, a query request may be initiated based on the interaction record query identification, to query the data interaction record of the data interaction, thereby achieving the objective that an authorized user can query the data interaction record without relying on two users in the data interaction.

According to an example, step 130 may include: encrypting the interaction record query identification; and sending the encrypted interaction record query identification. Correspondingly, step 150 may include: decrypting the encrypted interaction record query identification; and returning the data interaction record to the second user based on a decryption result.

By means of encryption and decryption, the security during transmission of the query link is improved, thus preventing the query link from being leaked during transmission.

In a specific case of this example, the encryption is applying a fixed operation to the interaction record query identification. More specifically, a fixed operation is applied to a fixed bit of the interaction record query identification. For example, assume that the interaction record query identification is the query link, the query link is in the format of http:aaa.bbb.cc.dd/xxxxxx, wherein xxxxxx is an identification code of the interaction record, the fixed operation is http:aaa-bbb.bbb.cc-dd.dd/xxxxxx, and http://eee.bbb.ff.dd/xxxxxx is obtained. For example, the third-party data interaction platform can encrypt the query link by using a predetermined encryption algorithm. The fixed operation is an operation without a key.

Correspondingly, the decryption is applying an inverse operation of the fixed operation to the encrypted interaction record query identification. When the interaction record query identification is the query link, specifically, the fixed operation is applied to a fixed bit of the query link. For example, for the encrypted query link http://eee.bbb.ff.dd/xxxxxx, the inverse operation of the fixed operation is http://eee+bbb.bbb.ff+dd.dd/xxxxxx, and therefore, the decrypted query link is still http:aaa.bbb.cc.dd/xxxxxx, that is, the query link sent initially is restored. After the third-party data interaction platform (or a server that is specially set to provide a query service for an interaction record on the third-party data interaction platform) receives a query request sent by the second user based on the encrypted interaction record query identification, an inverse operation of a fixed operation for encrypting the query link is applied to a fixed bit of the encrypted interaction record query identification, thereby decrypting the encrypted interaction record query identification. The decryption result may include the identification code (e.g., xxxxxx in the above example) of the interaction record. For example, if the interaction record is an order of a transaction conducted on an online shopping platform, the identification code of the interaction record is an order number of the order. The online shopping platform decrypts an encrypted interaction record query identification of the order to obtain the order number of the order, queries the order according to the order number, and returns the order to the second user.

In another specific case of this example, the encryption is key encryption, and the decryption is key decryption. The step of sending the encrypted query link includes: sending a key in addition to sending the encrypted interaction record query identification. The step of decrypting the encrypted interaction record query identification includes: decrypting the encrypted interaction record query identification by using a key input by the second user.

The key encryption on the interaction record query identification of the interaction record may be implemented by using a symmetric encryption algorithm or an asymmetric encryption algorithm. If a symmetric encryption algorithm is used, a key for encrypting the interaction record query identification and a key for decrypting the encrypted interaction record query identification are the same, and the key needs to be transmitted to the first user, such that the second user inputs the key when querying the interaction record. If an asymmetric encryption algorithm is used, a pair of encryption key and decryption key may be generated. The encryption key is used for encrypting an interaction record query identification of the interaction record to generate the encrypted interaction record query identification, and does not need to be transmitted to the first user. The decryption key is used for decrypting the encrypted interaction record query identification, and needs to be transmitted to the first user as the second user needs to input the decryption key when querying the interaction record.

Specifically, the key may be sent while the encrypted interaction record query identification is sent to the first user, such that the first user forwards the received encrypted interaction record query identification together with the key to the second user. The second user inputs the encrypted interaction record query identification and the key on a third-party platform website to query the interaction record.

In addition, the key may also be sent in a second sending manner different from the first sending manner of sending the encrypted interaction record query identification. In other words, the encrypted interaction record query identification and the key are sent in different manners. For example, the encrypted interaction record query identification and the key are sent to the first user, wherein the manner of sending the encrypted interaction record query identification may be sending it to the first user by sending in site information, while the manner of sending the key may be sending it to the first user in any manner other than in site information. For example, the key is sent to the first user in a manner of sending a mobile phone short message, an email, and the like according to a mobile phone number, an email account, and the like reserved by the first user on the third-party data interaction platform.

Correspondingly, after receiving the encrypted interaction record query identification and the key, the second user clicks or scans the encrypted interaction record query identification, and a query request for querying the interaction record is initiated through the browser. The third-party data interaction platform receives the query request sent by the second user, and may first display an input field to the second user in response to the query request, to prompt the query user to input a key. After inputting the received key, the query user presses a button for confirming the input (for example, a "Confirm the key" button). After receiving the key input by the second user, the third-party data interaction platform (or a server that is specially set to provide a query service for an interaction record on the third-party data interaction platform) decrypts the encrypted interaction record query identification by using the key.

Compared with the manner of fixed operation, the manner of encryption and decryption using a key further improves the security during transmission of the interaction record query identification, and further prevents the interaction record query identification from being leaked during transmission.

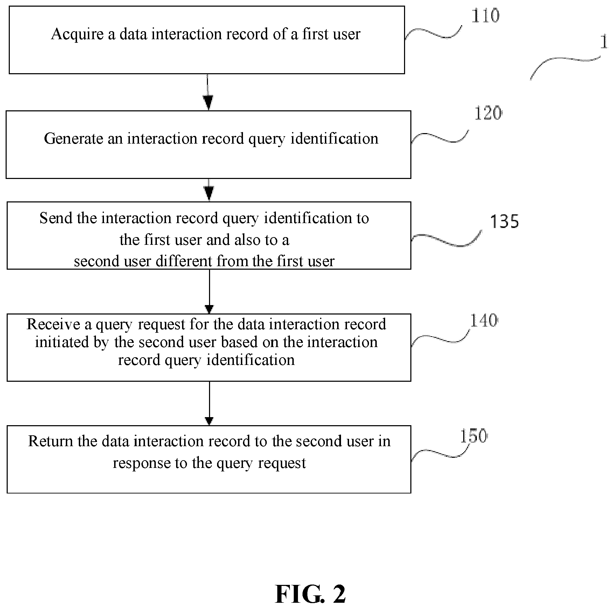

FIG 2 is a flowchart of an interaction record query processing method 1 according to another embodiment of the present application.

Steps 110 and 120 of the interaction record query processing method 1 in FIG 2 are identical to steps 110 and 120 in FIG. 1, and thus are not repeated.

In step 135, the interaction record query identification is sent to the first user and also to a second user different from the first user.

In a specific implementation, step 135 includes:
acquiring contact information of the second user; and
sending the interaction record query identification to the second user based on the acquired contact information of the second user.

In other words, in this embodiment, the first user does not need to forward the interaction record query identification to the second user, and the third-party interaction platform directly sends the interaction record query identification to the second user, thereby achieving the effect of reducing the work load of the first user, and implementing automation of the whole process of delivering the interaction record query identification.

A manner of acquiring the contact information of the second user is determining it automatically by the third-party interaction platform (or the server thereof) according to data interaction information of the data inaction. For example, for a transaction conducted on an online shopping platform, order information (interaction information) generally includes information of a consignee. The consignee of the order is determined as the second user. Contact information of the consignee, such as a mobile phone number, an email account, and an instant messaging application account, is acquired from the consignee information. Therefore, an interaction record query identification for querying the order of the transaction may be sent to the second user according to the acquired contact information. When the interaction record query identification is the query link, the query link is sent according to the contact information. When the interaction record query identification is a QR code, the QR code is sent according to a link manner.

Another manner of acquiring the contact information of the second user is receiving by the third-party interaction platform (or the server thereof) contact information of the second user from the first user. For example, the contact information of the second user may be input by the first user. Still by taking that a buyer user online purchases a commodity for a friend as an example, an input field for inputting contact information of the friend may be displayed on an order generation page, and the buyer user is prompted to input the contact information of the friend in the input field. The buyer user inputs the determined contact information of the friend in the displayed input field. The online shopping platform sends the interaction record query identification to the friend according to the received contact information of the friend input by the buyer user in the input field. When the interaction record query identification is the query link, the query link is sent according to the contact information. When the interaction record query identification is a QR code, the QR code is sent according to the link manner.

Steps 140 and 150 of the interaction record query processing method 1 in FIG 2 are basically identical to steps 140 and 150 in FIG. 1, and thus are not repeated.

According to another example, step 135 may include: encrypting the interaction record query identification; and sending the encrypted interaction record query identification. Correspondingly, step 150 may include: decrypting the encrypted interaction record query identification; and returning the interaction record to the second user based on a decryption result.

In a specific case of this example, the encryption is applying a fixed operation to the interaction record query identification. Correspondingly, the decryption is applying an inverse operation of the fixed operation to the encrypted interaction record query identification.

In another specific implementation of this embodiment, the encryption is key encryption, and the decryption is key decryption. The step of sending the encrypted interaction record query identification includes: sending a key in addition to sending the encrypted interaction record query identification. The step of decrypting the encrypted interaction record query identification includes: decrypting the encrypted interaction record query identification by using a key input by the second user.

The key encryption on the interaction record query identification may be implemented by using a symmetric encryption algorithm or an asymmetric encryption algorithm. If a symmetric encryption algorithm is used, a key for encrypting the interaction record query identification and a key for decrypting the encrypted interaction record query identification are the same, and the key needs to be transmitted to the second user, such that the second user inputs the key when querying the interaction record. If an asymmetric encryption algorithm is used, a pair of encryption key and decryption key may be generated. The encryption key is used for encrypting an interaction record query identification of the interaction record to generate the encrypted interaction record query identification, and does not need to be transmitted to the second user. The decryption key is used for decrypting the encrypted interaction record query identification, and needs to be transmitted to the second user as the second user needs to input the decryption key when querying the interaction record.

Specifically, the key may be sent while the encrypted interaction record query identification is sent to the second user, such that the second user inputs the encrypted interaction record query identification and the key on the third-party platform website to query the interaction record.

In addition, the key may also be sent in a second sending manner different from the first sending manner of sending the encrypted interaction record query identification. In other words, the encrypted interaction record query identification and the key are sent in different manners. For example, the encrypted interaction record query identification and the key are sent to the second user, wherein the manner of sending the encrypted interaction record query identification is sending a short message to a mobile phone number of the second user, and the manner of sending the key is sending an email to an email box of the second user.

Correspondingly, after receiving the encrypted interaction record query identification and the key, the second user clicks or scans the encrypted interaction record query identification, and a query request for querying the data interaction record is initiated through the browser. The third-party data interaction platform receives the query request sent by the second user, and may first display an input field to the second user in response to the query request, to prompt the second user to input a key. After inputting the received key, the second user presses a button for confirming the input (for example, a "Confirm the key" button). After receiving the key input by the second user, the third-party data interaction platform decrypts the encrypted interaction record query identification by using the key.

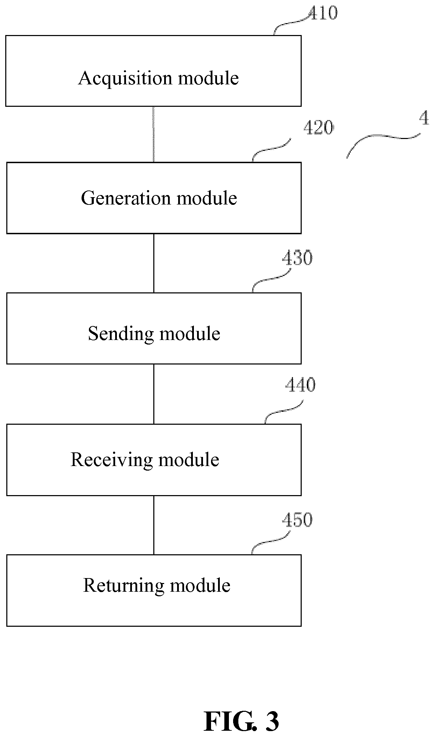

Based on the same inventive conception of the method, according to another embodiment of the present invention, an interaction record query processing device 4 is further provided, as shown in FIG 3.

Functions implemented by the device embodiments basically correspond to the above method embodiments shown in FIG. 1 to FIG 2, and therefore, reference may be made to related illustrations in the above method embodiments for those not described in detail in the device embodiments, which are not repeated herein.

It should be noted that the present application may be implemented in software and/or a combination of software and hardware. For example, various apparatuses according to the present application may be implemented by an application-specific integrated circuit (ASIC) or any other similar hardware devices. In one embodiment, the software program of the present application may be executed by a processor to implement the above-mentioned steps or functions. Likewise, the software program (including the relevant data structure) of the present application may be stored in a computer-readable recording medium, for example, a RAM memory, a magnetic or optical driver, a floppy disk, or a similar device. Additionally, some steps or functions of the present application may be implemented by hardware, for example, as a circuit cooperating with the processor to perform various steps or functions.

For those skilled in the art, it is apparent that the present application is not limited to the details of the above-mentioned exemplary embodiments, and the present application may be implemented in other specific manners without departing from the basic features of the present application. Thus, in any way, the embodiments should be regarded as exemplary and non-limitative; the scope of the present application is limited by the appended claims, rather than the above-mentioned description. No reference signs in the claims should be regarded as limiting the involved claims. Besides, it is apparent that the term "comprise" does not exclude other units or steps, and the singular form does not exclude the plural form. A plurality of units or means stated in a system claim may also be implemented by a single unit or means through software or hardware. Terms such as "first" and "second" are used to indicate names, but do not indicate any particular sequence.

Exemplary embodiments are specifically shown and described in the foregoing; however, it will be appreciated by those skilled in the art that forms and details thereof may be varied without departing from the scope of the claims.

## Claims

1. An interaction record query processing method executed on a third-party interaction platform, the method comprising:
acquiring (110) a data interaction record of a first user, wherein the data interaction record is a record generated, by the third-party interaction platform, for a data interaction when the data interaction is performed by two users on the third-party interaction platform, wherein the two users include the first user and another user, and wherein the data interaction record includes user information of the first user and the other user, data interaction content, and data interaction progress information;
generating (120) an interaction record query identification, wherein the interaction record query identification is a query link for querying the data interaction record of the first user;
sending (130) the interaction record query identification to the first user;
receiving (140) a query request for the data interaction record initiated by a second user different from the first user, wherein the query request is sent by the second user through a browser on a mobile device of the second user, wherein the second user is related to the data interaction, wherein the query request is initiated based on the interaction record query identification, wherein the second user is also different from the other user, wherein the second user is authorized in addition to the first user and the other user in the data interaction to query the data interaction record without relying on the first user and the other user; and
returning (150) a corresponding interaction record query result according to a query item input by the second user, wherein returning the corresponding interaction record query result includes
after the second user initiates the query request for the query link of the data interaction record based on the interaction record query identification, displaying, in the browser on the mobile device of the second user, a plurality of query buttons corresponding to a plurality of query items to the second user, wherein the plurality of query items include the user information for the first user and the other user in the data interaction, the data interaction content, and the data interaction progress information,
receiving from the second user a selection of one of the plurality of query buttons to conduct a query, and
displaying, in the browser to the second user, information associated with a selected query item identified by the second-user-selected query button.

2. The interaction record query processing method of claim 1, wherein the data interaction is an online transaction, and wherein the data interaction record is an order generated by the online transaction.

3. The interaction record query processing method of claim 1, wherein the second user is related to a result of the data interaction.

4. The interaction record query processing method of claim 1, wherein the method further comprises:
sending the interaction record query identification to the second user different from the first user.

5. The interaction record query processing method of claim 4, wherein the step of sending the interaction record query identification to a second user different from the first user comprises:
acquiring contact information of the second user; and
sending the interaction record query identification to the second user based on the acquired contact information of the second user.

6. An interaction record query processing device comprising multiple modules (410, 420, 430, 440, 450) configured to perform the method of any one of claims 1 to 5.

## Patentansprüche

1. Interaktionsaufzeichnungsabfrage-Verarbeitungsverfahren, ausgeführt auf einer Drittpartei-Interaktionsplattform, wobei das Verfahren Folgendes umfasst:
Erfassen (110) einer Dateninteraktionsaufzeichnung eines ersten Benutzers, wobei die Dateninteraktionsaufzeichnung eine Aufzeichnung ist, die, durch die Drittpartei-Interaktionsplattform, für eine Dateninteraktion erzeugt wird, wenn die Dateninteraktion durch zwei Benutzer auf der Drittpartei-Interaktionsplattform durchgeführt wird, wobei die zwei Benutzer den ersten Benutzer und einen weiteren Benutzer beinhalten und wobei die Dateninteraktionsaufzeichnung Benutzerinformationen des ersten Benutzers und des anderen Benutzers, Dateninteraktionsinhalt und Dateninteraktionsfortschrittinformationen beinhalten;
Erzeugen (120) einer Interaktionsaufzeichnungsabfrage-Identifikation, wobei die Interaktionsaufzeichnungsabfrage-Identifikation ein Abfragelink zum Abfragen der Dateninteraktionsaufzeichnung des ersten Benutzers ist;
Senden (130) der Interaktionsaufzeichnungsabfrage-Identifikation an den ersten Benutzer;
Empfangen (140) einer Abfrageanforderung für die Dateninteraktionsaufzeichnung, die durch einen zweiten Benutzer, der sich von dem ersten Benutzer unterscheidet, eingeleitet wurde, wobei die Abfrageanforderung durch den zweiten Benutzer über einen Browser auf einem Mobilgerät des zweiten Benutzers gesendet wurde, wobei der zweite Benutzer in Beziehung mit der Dateninteraktion steht, wobei die Abfrageanforderung auf der Grundlage der Interaktionsaufzeichnungsabfrage-Identifikation eingeleitet wird, wobei sich der zweite Benutzer auch von dem anderen Benutzer unterscheidet, wobei der zweite Benutzer zusätzlich zu dem ersten Benutzer und dem anderen Benutzer in der Dateninteraktion autorisiert ist, die Dateninteraktionsaufzeichnung abzufragen, ohne von dem ersten Benutzer und dem anderen Benutzer abzuhängen; und
Rücksenden (150) eines entsprechenden Interaktionsaufzeichnungsabfrage-Ergebnisses gemäß einer Abfrageposteneingabe durch den zweiten Benutzer, wobei Rücksenden des entsprechenden Interaktionsaufzeichnungsabfrage-Ergebnisses beinhaltet:
nachdem der zweite Benutzer die Abfrageanforderung für den Abfragelink der Dateninteraktionsaufzeichnung auf der Grundlage der Interaktionsaufzeichnungsabfrage-Identifikation eingeleitet hat, Anzeigen, in dem Browser auf dem Mobilgerät des zweiten Benutzers, einer Vielzahl von Abfragetasten, die einer Vielzahl von Abfrageposten entspricht, für den zweiten Benutzer, wobei die Vielzahl von Abfrageposten die Benutzerinformationen für den ersten Benutzer und den anderen Benutzer in der Dateninteraktion, den Dateninteraktionsinhalt und die Dateninteraktionsfortschrittinformationen beinhalten,
Empfangen von dem zweiten Benutzer einer Auswahl von einer aus der Vielzahl von Abfragetasten, um eine Abfrage vorzunehmen, und
Anzeigen, in dem Browser für den zweiten Benutzer, von Informationen, die mit einem ausgewählten Abfrageposten, der durch die Zweiter-Benutzer-ausgewählte Abfragetaste identifiziert ist, assoziiert sind.

2. Interaktionsaufzeichnungsabfrage-Verarbeitungsverfahren nach Anspruch 1, wobei die Dateninteraktion eine Online-Transaktion ist und wobei die Dateninteraktionsaufzeichnung eine Bestellung ist, die durch die Online-Transaktion erzeugt wird.

3. Interaktionsaufzeichnungsabfrage-Verarbeitungsverfahren nach Anspruch 1, wobei der zweite Benutzer mit einem Ergebnis der Dateninteraktion in Beziehung steht.

4. Interaktionsaufzeichnungsabfrage-Verarbeitungsverfahren nach Anspruch 1, wobei das Verfahren ferner Folgendes umfasst:
Senden der Interaktionsaufzeichnungsabfrage-Identifikation an den zweiten Benutzer, der sich von dem ersten Benutzer unterscheidet.

5. Interaktionsaufzeichnungsabfrage-Verarbeitungsverfahren nach Anspruch 4, wobei der Schritt des Sendens der Interaktionsaufzeichnungsabfrage-Identifikation an einen zweiten Benutzer, der sich von dem ersten Benutzer unterscheidet, Folgendes umfasst:
Erfassen von Kontaktinformationen des zweiten Benutzers; und
Senden der Interaktionsaufzeichnungsabfrage-Identifikation an den zweiten Benutzer auf der Grundlage der erfassten Kontaktinformationen des zweiten Benutzers.

6. Interaktionsaufzeichnungsabfrage-Verarbeitungsvorrichtung, die mehrere Module (410, 420, 430, 440, 450) umfasst, die ausgelegt sind zum Durchführen des Verfahrens nach einem der Ansprüche 1 bis 5.

## Revendications

1. Procédé de traitement de recherche d'enregistrement d'interaction exécuté sur une plateforme d'interaction tierce, le procédé comprenant :
l'acquisition (110) d'un enregistrement d'interaction de données d'un premier utilisateur, l'enregistrement d'interaction de données étant un enregistrement généré, par la plateforme d'interaction tierce, pour une interaction de données lorsque l'interaction de données est réalisée par deux utilisateurs sur la plateforme d'interaction tierce, les deux utilisateurs comportant le premier utilisateur et un autre utilisateur, et l'enregistrement d'interaction de données comportant des informations d'utilisateur du premier utilisateur et de l'autre utilisateur, un contenu d'interaction de données et des informations d'état d'avancement d'interaction de données ;
la génération (120) d'une identification de recherche d'enregistrement d'interaction, l'identification de recherche d'enregistrement d'interaction étant un lien de recherche pour rechercher l'enregistrement d'interaction de données du premier utilisateur ;
l'envoi (130) de l'identification de recherche d'enregistrement d'interaction au premier utilisateur ;
la réception (140) d'une demande de recherche de l'enregistrement d'interaction de données lancée par un deuxième utilisateur différent du premier utilisateur, la demande de recherche étant envoyée par le deuxième utilisateur par le biais d'un navigateur sur un dispositif mobile du deuxième utilisateur, le deuxième utilisateur étant lié à l'interaction de données, la demande de recherche étant lancée sur la base de l'identification de recherche d'enregistrement d'interaction, le deuxième utilisateur étant également différent de l'autre utilisateur, le deuxième utilisateur étant autorisé, outre le premier utilisateur et l'autre utilisateur dans l'interaction de données, à rechercher l'enregistrement d'interaction de données sans dépendre du premier utilisateur et de l'autre utilisateur ; et
le renvoi (150) d'un résultat de recherche d'enregistrement d'interaction correspondant selon un élément de recherche entré par le deuxième utilisateur, le renvoi du résultat de recherche d'enregistrement d'interaction correspondant comportant
suite au lancement, par le deuxième utilisateur, de la demande de recherche du lien de recherche de l'enregistrement d'interaction de données sur la base de l'identification de recherche d'enregistrement d'interaction, l'affichage, dans le navigateur du dispositif mobile du deuxième utilisateur, à l'intention du deuxième utilisateur, d'une pluralité de boutons de recherche correspondant à une pluralité d'éléments de recherche, la pluralité d'éléments de recherche comportant les informations d'utilisateur pour le premier utilisateur et l'autre utilisateur dans l'interaction de données, le contenu d'interaction de données et les informations d'état d'avancement d'interaction de données,
la réception, depuis le deuxième utilisateur, d'une sélection d'un de la pluralité de boutons de recherche pour mener une recherche, et
l'affichage, dans le navigateur à l'intention du deuxième utilisateur, d'informations associées à un élément de recherche sélectionné identifié par le bouton de recherche sélectionné par le deuxième utilisateur.

2. Procédé de traitement de recherche d'enregistrement d'interaction selon la revendication 1, dans lequel l'interaction de données est une transaction en ligne, et dans lequel l'enregistrement d'interaction de données est une commande générée par la transaction en ligne.

3. Procédé de traitement de recherche d'enregistrement d'interaction selon la revendication 1, dans lequel le deuxième utilisateur est lié à un résultat de l'interaction de données.

4. Procédé de traitement de recherche d'enregistrement d'interaction selon la revendication 1, le procédé comprenant en outre :
l'envoi de l'identification de recherche d'enregistrement d'interaction au deuxième utilisateur différent du premier utilisateur.

5. Procédé de traitement de recherche d'enregistrement d'interaction selon la revendication 4, dans lequel l'étape d'envoi de l'identification de recherche d'enregistrement d'interaction à un deuxième utilisateur différent du premier utilisateur comprend :
l'acquisition d'informations de contact du deuxième utilisateur ; et
l'envoi de l'identification de recherche d'enregistrement d'interaction au deuxième utilisateur sur la base des informations de contact acquises du deuxième utilisateur.

6. Dispositif de traitement de recherche d'enregistrement d'interaction comprenant de multiples modules (410, 420, 430, 440, 450) configurés pour réaliser le procédé selon l'une quelconque des revendications 1 à 5.
